# NEW EUROPEAN PATENT SPECIFICATION

(11) **EP 1 786 857 B2**
(45) Date of publication and mention of the opposition decision: **30.03.2016**
(45) Mention of the grant of the patent: 28.12.2011
(21) Application number: 05789829.8
(22) Date of filing: 08.09.2005
(51) Int. Cl.: C08J 9/32

(54) **LOW DENSITY POLYURETHANE INTEGRAL SKIN FOAM SYSTEM PREPARED USING EXPANDABLE MICROSPHERES AND WATER AS COBLOWING AGENT**
SYSTEM FÜR POLYURETHANSCHAUMSTOFFE NIEDRIGER DICHTE MIT VERDICHTETER RANDZONE, HERGESTELLT UNTER VERWENDUNG VON EXPANDIERBAREN MIKROKÜGELCHEN UND WASSER ALS COTREIBMITTEL
SYSTEME DE MOUSSE A PEAU INTEGREE EN POLYURETHANE FAIBLE DENSITE PREPARE AU MOYEN DE MICROSPHERES EXPANSIBLES ET D'EAU COMME AGENT DE CO-SOUFFLAGE

(30) Priority: 08.09.2004 WO PCT/IT2004/000486
(43) Date of publication of application: 23.05.2007
(73) Proprietor: Elachem S.r.l., 27029 Vigevano (PD) (IT)
(72) Inventor: BRUSA, Federico, ELACHEM S.r.l., 27029 Vigevano (PV) (IT); BRAMBILLASCA, Davide, ELACHEM S.r.l., 27029 Vigevano (PV) (IT)
(74) Representative: Gislon, Gabriele
(86) International application number: PCT/IB2005/002658
(87) International publication number: WO 2006/027671

(56) References cited:
- DE-A1- 10 063 497
- DE-A1- 10 248 877
- US-A- 5 260 343
- US-A- 5 418 257
- AKZO NOBEL: "Expancel - the product" EXPANCEL MICROSPHERES: AN INTRODUCTION, 1998, XP002324231

## Description

The object of the present invention is a polyurethane system and process for the production of low density foamed footwear products with integral skin. More particularly, the invention relates to a reactive liquid polyurethane system comprising isocyanate prepolymer, polyol, additives, a blowing agent and expandable microspheres, to a process for the production of very low density foamed products from such system by reaction of polyol and isocyanate and to the foamed footwear products thus obtained. The products are obtained by casting or injection moulding a mixture of the system components in a mould where the reaction occurs. Specific products are expanded flexible, products such as shoe intersoles and soles.

The invention polyurethane systems, process and products involve the known reaction of the system components in a mould to obtain a foamed product having a skin integral with the product. According to a known technique, predetermined amounts of the two components (polyol + additives and isocyanate prepolymer) are fed to a mixing head of a moulding machine. After mixing, the components, are fed to a mould where the polymerization reaction occurs; this is done by casting or injection moulding (e.g. RIM). During reaction, the blowing agent expands and foams the polymer mixture while the latter is still viscous; the foam eventually becomes a gel and then reaches a consistency suitable for removal from the mould.

These systems, i.e. the kit-of-parts comprising polyol + additives and isocyanate prepolymer, are commercially available (and are referred to as "polyurethanic systems) from e.g. BASF, Dow, Coim, Huntsman, Dong Sung and many other producers.

The above discussed field, i.e. that of liquid reactive systems, is therefore dramatically different from the field of thermoplastic polyurethanes, or TPU, where the polyol and isocyanate are reacted in an extruder, without the use of a blowing agent, to give non-expanded products such as pellets of elastomers and resins for coatings and adhesives. Pellets of TPU can be extruded or injection moulded to obtain the final product, that is therefore not a foamed product per se and requires further processing in the presence of a blowing agent to provide a foamed product.

Expandable microspheres are known and have been commercially available for at least thirty years; they essentially consist of capsules of thermoplastic material, with an expansion agent therein, such as for example a hydrocarbon (e.g. liquid isobutane). If brought to a sufficiently high temperature, the thermoplastic walls of the microspheres become plastic and the expanding agent evaporates, thus increasing the volume of the microspheres. One example of a patent relating to the production of microspheres is US-A-4108806; an example of a commercially available product is that known as EXPANCEL (trade mark registered by Akzo Nobel), a detailed description of which may be found on the corresponding web site www.expancel.com. In the present application reference is made to expandable microspheres only.

The use of expandable microspheres with liquid reactive polyurethane systems in order to reduce the density of the finished product, is known.

US-A-5665785 (Urethane Technologies) relates to a method of expanding reactive polymeric compositions selected from polyurethanes, polyesters, poly(meth)acrylates, polyvilyl chlorides and others, wherein (in the polyurethane examples) approx. 5% by weight over the polyol, of expandable microspheres is used in orderto obtain, at a temperature of between 80 and 130°C, a product having a good integral skin. According to the teaching of this document, the use of volatile blowing agents results in several drawbacks and use of water as blowing agent should be avoided (col.4); accordingly, blowing agents are replaced by microspheres to give expanded products. The minimum density obtainable (example 20) was 0.39 g/ml for the molded product (a tyre) and 0.24 g/ml for the free-rise foam, i.e. for the foamed product obtained by pouring the reacting mixture in a cup.

EP-A-1057841 discloses a polyurethane system for producing polishing pads for polishing semiconductor devices. In this system both expanded and expandable microspheres can be used with a small amount of water as additional blowing agent. The system comprises a diamine polymer compound to be reacted with a TDI prepolymer. The document is silent about density of the final product, that requires open cells where the polishing paste is housed during the polishing of the silicon wafer.

US-A-5,260,343 discloses an integral skin polyurethane foam obtained by reacting polyisocianates with polyols and with additives, such as suitable catalysts, alcohols, initiators, stabilizers, surface active agents, blowing and density controlling agents (expandable microspheres containing a volatile hydrocarbon and water). The suitable polyols are polyethers. Water is used as co-blowing agent and its used amount varies in function of the desired final foam density. The suggested water amount is 0,5 % by weight of the total weight of the non-isocyanate components, while the amount of micropheres is limited in the range of 1,5-15% by weight of the total weight of the non-isocyanate components. The density of the obtained polyurethane foam varies from 0,33 g/cm³ to 0,42 g/cm³.

DE-A-10248877, which is the closest prior art, discloses a process for the preparation of a polyurethane foam from polyols, polyisocianates, expandable microspheres, water and other additives. Polyethers are mentioned as suitable polyols for obtaining high quality polyurethane foam. The amount of expandable microspheres is comprised within the range of 1-8% by weight with respect to the total amount of polyols and other additives, while the amount of water should be in the range of 0,1-0,3% by weight with respect to the total weight of polyols and other additives. The polyurethane foam obtained shows densities ranging from 0,24 g/cm³ to 0,311 g/cm³. EP-A-1308396 teaches to use expandable microspheres as the only expanding agent in polyurethane compositions for sealing elements for metallic caps. A density of 0.80 (free rise, page 11) is mentioned.

Alternative techniques to those described above have been proposed in order to obtain foam products having densities of about 0.30 g/cm³. For example, US 2003/0015815 (Huntsman International) proposes the use of thermoplastic polyurethane microspheres (TPU) with the injection of gas using counterpressure.

EP-A-1233037 (Huntsman international) discloses a TPU pellet composition where the thermoplastic pellets are first mixed with a binding agent and with expandable microspheres (optionally a solid expanding agent may be added); after injection molding an expanded product is obtained. The minimum density obtained is 0.35 g/ml.

US-B-6759443 (BASF) provides the use of PTFE in order to improve the physical characteristics of the final foam, which, in the moulded product, may be as little as 0.31 g/cm³.

The above mentioned art has several drawbacks.

The thermoplastic polyurethanes are not suitable for obtaining expanded products with density of less than 0.30 g/ml and require costly and expensive injection machines.

The liquid reactive systems known are not suitable to provide expanded footware products with a product density of less than 0.30, or a free-rise density of less than 0.18, without losing the required physical and mechanical characteristics, e.g. good skin, flexibility, wear resistance, elongation, split tear, tensile strength and resiliency that are critical for soles, intersoles and footwear products in general. In other words, there is no teaching in the prior art on how to manufacture a footwear product with very low density (i.e. specific gravity of less than 0.30 - 0.28 g/ml for the moulded product) and good characteristics.

### Summary of the invention.

For this reason, the need has arisen for providing a system and a process for the production of low density foamed footwear products with good physical characteristics. The object of the present invention is to solve the above discussed problems and provide a polyurethane reactive system that can give foamed molded products having densities of less than 0.30 g/cm³ with good integral skin and good foam product characteristics.

This object is achieved by means of the present invention, that relates to a liquid polyurethane reactive system according to claim 1.

Preferably, the expandable microsphere range is 1.5% to 20.0% and more preferably between 2.0% to 10.0 %; the range of amount of water is preferably 0.75% to 3.5% and more preferably 1.0% to 2.5%.

The invention furthermore concerns a process for the production of foamed footwear products with integral skin according to claim 5.

According to the invention, the expanding agent is water. The amount of water is preferably within the range of 0.75% to 3.0% and most preferably of 1.0% to 2.5% by weight on the weight of said polyol, including additives.

A further object of the invention is an expanded polyurethane footwear.product having an integral skin as obtainable by the above described method, characterised by having a free-rise density within the range of 0.05 to 0.22 g/ml and/or a molded product density of 0.10 to 0.28 g/ml..

The invention has dramatic advantages with respect to the known art.

Indeed, it was surprisingly found that the use of microspheres allows a significant increase in the amount of expanding agent normally used, so as to obtain a final moulded product having an integral skin and a density of less than 0.30, in particular of 0.20 or even 0.16 and as low as 0.10 g/ml. Moreover, the products according to the invention showed to be provided with mechanical properties comparable to characteristics of known footwear products having densities around 0.30 and to products having even higher densities.

By reducing so dramatically the specific gravity of a sole or an intersole footwear product without reducing the product mechanical characteristics it is possible to obtain shoes and sandals very light and still within the required technical parameters for said products.

The fact that such densities may be obtained using traditional polyol/isocyanate systems and, above all, using traditional plants is particularly advantageous. In other words, the low densities according to the present invention are achievable without having to modify the moulding plants already in use and without having to replace them with more expensive ones such as the new Bayer CO₂ system.

As above mentioned, despite the reduced density, the foamed products such as the soles or other footwear manufacturing components thus obtained show substantially no shrinkage and have excellent skin and physical mechanical characteristics (e.g. wear resistance, bending number, elongation and the like) required for their use. Furthermore, the low density products according to the invention have very good resistance to hydrolysis, i.e. their mechanical characteristics remain substantially unaltered even following hydrolysis (i.e. treatment with water).

### Brief description of the drawings.

Fig. 1 is a graphical representation of the ranges of amounts of microspheres and expanding agent (water) that can be used according to the invention and of the resulting free-rise densities that can be reached.
Fig. 2 shows four photographs of corresponding points on the surface of a traditional intersole and of an intersole according to the invention.

### Description of the preferred embodiments of the invention.

As mentioned above, the formulation according to the invention provides for the use of expandable microspheres in a polyol/isocyanate system in order to support the foamed structure that is formed by an excess of foaming agent and prevent the foamed structure from collapsing before polymerization. To this purpose, the expandable microspheres are expanded at least in part during the expansion step of the polyurethane.

In addition to linear and branched polyester "adipic" resins, suitable polyols are, for example dicarboxylic resins and polymeric resins with molecular weights within the range of 1,500 to 3,000.

The polyol functionality preferably is within the range of 2.0 to 2.3.

Suitable isocyanates are MDI based isocyanates in pre-polymer form, i.e. the linear or branched products derived from MDI. Preferably the so called "pure grade" MDI (33.5% NCO) or "modified grade" MDI (about 29% NCO) is used. Branched MDI isocyanate pre-polymers are preferred since they give the best results. The NCO percent of the isocyanate prepolymer is within the range of 16% % to 34% and the functionality is within the range of 2.0 to 2.05, preferably of 2.02-2.04.

The ratio of isocyanate propolymer to polyol (by weight) is within the range of 160/100 to 90/100.

The normally used catalysts and additives are also present. More particularly, the composition will typically include chain extension agents such as MEG, butanediol and the like, and the necessary additives including known catalysts such as Ammino Delay Catalyst (Dabco), surfactants, surface active agents and emulsifiers, cell regulators, cell openers, expanding agents, triethanol amine. The amount of Ammine catalyst is preferably within 0.25% to 2.0% (w/w on polyol + additives).

The amount of expandable microspheres present in the composition according to the present invention is within the range of 1.0% to 30.0% by weight on the weight of the polyol, preferably within the range of 1.5% to 20.0%, more preferably of 2.0% to 10.0%, by weight on the weight of the polyol.

The expanding agents used are selected from water, CO₂, halogenated hydrocarbons such as CFC, HFC, HCFC, 1,1,1,2-tetrafluoroethane, and the commercially available substitutes of halogenated hydrocarbons, such as cyclopentane, cyclopentane, FORANE ® and the like.

The expanding agent is water.

It has been surprisingly found that, when the microspheres are added to a known polyurethane formulation in the mentioned amounts, prior to its expansion, it is possible to significantly increase the amount of expanding agent used without the foam collapsing, as it would occur in the absence of microspheres or in the presence of a too little amount of microspheres. In practice, it has been observed that it is possible to use an amount of expanding agent which is up to 6.0 times the amount normally used in orderto obtain a polyurethane polymer foam from such polyol-isocyanate system. Usually, the amount of water used in a standard polyurethane system for footwear is 0.3% to a maximum of 1.2% (w/w on the polyol and additives).

The amount of water added as expanding agent is within the range of 0.5% to 3.5%, preferably of 0.75% to 3.0% and most preferably of 1.0% to 2.5% by weight on the weight of the polyol and additives, according to the product typology. By way of example, for the production of an intersole according to the present invention, an amount of water equal to 1.5% may be used, compared with the 0.8% traditionally used as the maximum possible amount to avoid the collapse of the foam; for the production of soles for performance shoes or soles for slippers, the maximum useable amount of water increases from 0.3% - 0.6% to 1.25% - 3.50% by weight.

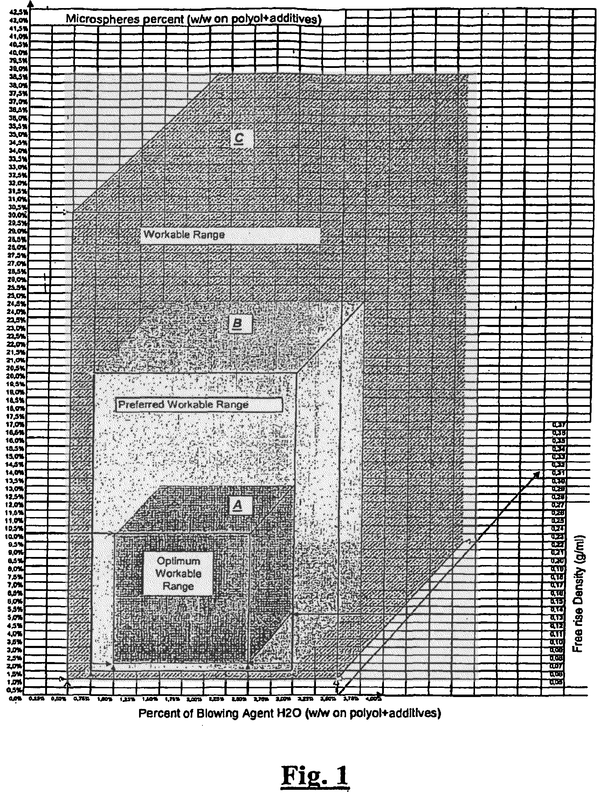

Fig. 1 shows the interrelation between the amount of microspheres and the amount of water (as percent w/w on the polyol+additives) added to the polyurethane system. It can be seen that for smaller amounts the ratio microspheres/ water is 2/1 and that this ratio increases with the increase of the amount of water used in the system to a ratio of almost 10/1 for higher amounts of water (i.e. the water amount is 0.5 to 0.1 the microspheres amount). The minimum ratio is 2 parts of microspheres for 1 part of water (% w/w on the polyol and additives).

In fig.1 three workable ranges are shown: A, B and C. The graph of fig. 1 also shows the free-rise density range obtainable in each of the workable ranges.

In the wider range, i.e. C, the amount of microspheres is in the range of 1.0% to 30.0% and the amount of water is in the range of 0.50% to 3.5%. For this range free-rise densities of 0.22 to 0.05 g/ml can be obtained. It should be noted that the graphic representation of the density values in fig. 1 is illustrative and should not be read as a direct correlation of density values with the other points. In other words, a higher density of the foamed product is obtained with lower amounts of water and microspheres, and viceversa: a free-rise density of 0.05 g/ml is obtainable with 30% microspheres and 3.5% water, while 2% microspheres and 1% water give a higher density. In preferred range B, the amount of microspheres is in the range of 1.5% to 20.0% and the amount of water is in the range of 0.75% to 3.0%. For this range free-rise densities of 0.15 to 0.06 g/ml can be obtained. In most preferred range A, the amount of microspheres is in the range of 2.0% to 10.0% and the amount of water is in the range of 1.0% to 2.5%. Forthis range free-rise densities of 0.13 to 0.07 g/ml can be obtained.

The temperature of the mixture during the reaction of the polyol/isocyanate-prepplymer mixture must be sufficiently high to cause the expansion of the microspheres or, *vice versa,* microspheres with expansion temperatures corresponding to that which develops during the reaction between the polyol and the prepolymer are used.

Preferably, such temperature is reached in short times, between 1 to 60 seconds, and more preferably between 1 to 35 seconds, and however in such times as to expand the microspheres before the foam structure collapses because of the excess expanding agent. In other words, the microspheres are used as a support for the structure foamed or under foaming, to compensate for the excess of expanding agent used, and must at least partly expand during the expansion step, i.e. during the foaming of the polymer mixture (polyol and isocyanate prepolymer). Preferably, the microspheres expand substantially simultaneously to the foaming of the polyol and isocyanate-prepolymer mixture, to provide a support for the polymer foamed structure, which would otherwise collapse, the foaming caused by the blowing agent can go on after end of microspheres expansion. The use of expandable microspheres in a polyol/isocyanate prepolymer system in order to stabilise a foam structure in the presence of excess expanding agent is, hence, a further object of the invention. The invention will now be described in greater detail with reference to the following process methods, given by way of non-limiting examples.

Several tests have been carried out for different field applications such as: sandals, soles, intersoles, by casting or direct injection moulding.

A foamed molded product with a density of less than or equal to 0.20 g/cm³ has been obtained by using a traditional polyurethane system as a base which, by traditional moulding can give products with densities of 0.30 g/cm³ upwards. To this formulation system Expancel ® (Akzo Nobel) microspheres, were added together with an excess amount of expanding agent (H₂0), i.e. up to an amount that can be 6 times greater than the standard one. It has been discovered that dramatic density reductions are only obtained by combining the use of exandable microspheres with quantities of H₂O greater than those used according to the prior art.

The free-rise density reached according to the invention is within the range of 0.05 to 0.22 g/cm³, values which were unthinkable and inapplicable up to now.

In known systems no microspheres or microspheres only or microspheres with an insufficient amount of expanding agent (e.g. water) were used. With these parameters, the excessive use of H₂0 or other expanding agents, including the microspheres, causes the disruption of the foam in the reaction step, thus preventing a sufficient amount of skin to be formed and the system to be used. The invention system works perfectly with different types of microspheres. During the reaction, the "explosion" of the microspheres occurs at a relatively low initiation temperature and continues during part of the expansion step of the mixed system. Preferably, the last part of the expansion step is carried out mainly by the blowing agent, as can be visually seen by a lower expansion rate of the foamed structure. A lower expansion speed results in a better control of expansion of the foam and in the possibility of having the foam reach all the areas of the mould, i.e. of producing a complete moulded piece without missing portions. This feature, i.e. the controllability of the expansion step, is very important for moulding products having a complex shape; an example of complex-shape products are intersoles for sport shoes, that often comprise a plurality of air-bags or similar inserts that must be incapsulated within the intersole polyurethane matrix.

The maximum temperature which may be reached during the foam reaction is depending on the percentage of chain extender used and the branching and the free NCO index of the prepolymer. The best dimensional stability results are obtained with shorter microsphere "explosion" times (up to 35 seconds), such time is controlled by traditional ammine catalysts, the amounts of which increase with a reduction of free NCO and the branching of the prepolymer used.

Preferably, within the range given for the microspheres as a percent on the polyol amount, the amount of microspheres used will be greater when a greater amount of NCO prepolymer is used with the same amount of polyol because of a different NCO index. As a rule of thumb, 1 % by weight of microspheres, on the weight of the polyol, is added to the starting amount for each 50 parts by weight of isocyanate exceeding a 100/100 ratio of isocyanate/polyol. Furthermore, in the presence of linear prepolymers, the amount of microspheres (for the same microsphere type) must also be increased in order to better stabilise the foam. With linear prepolymers, the reaction does not reach the optimal temperature of 120-122 °C but merely 110-115 °C, the minimum limit temperature for the adequate explosion of the microspheres and the stability of the foam.

In the preparation of materials, the best results are obtained by first mixing the microspheres with the compound containing the chain extender (e. g. MEG) and all the other additives necessary for the polyurethane foaming (catalysts, surfactants, surface-active agents and emulsifiers, cell openers, expanding agents and cell regulators) and by subsequently mixing this compound with the polyol: the polyol temperature should not exceed 55-60 °C. If the compound with the microsphere is mixed into a polyol at a higher temperature, the characteristics of the microspheres might be compromised because they are brought too close to their "explosion" temperature, which should occur during the expansion step, only.

The moulding step is carried out by using any type of existing traditional plants without any modifications having to be made. The additives, microspheres and water are added to the polyol, the added polyol and isocyanate prepolymer are fed to a known mixing head and casted or injected into a mould.

By maintaining the temperature of the mould lower than 55-60 °C good finishing and de-moulding times are obtained for soles.

The temperature of the materials in the plant are set as for standard materials, i.e. with a temperature of the polyol around 40 - 50 °C and that of the isocyanates-prepolymers around 35-40 ° C.

The polyol including the microspheres has the same lifespan in the plant as without microspheres and does not show any hygroscopicity problems differing from the traditional materials. The added polyol must be kept stirring within the plant, just like the traditional materials.

Depending on the mould models and the formulations, the material exhibits a stability between 0.10 to 0.28 without showing any shrinkage or collapse of the foam whilst maintaining optimal physical and mechanical characteristics, that are consistent and in line with corresponding materials commercially available.

The following Examples illustrates the production of a sole for sandals.

### Example 1- Sandal sole production.

550 grams of "adipic" polyester resin with MW 2000 and OH number of 56 are mixed with 200 g of polymer resin with MW 2500 and OH number 60, 150 g of a bicarboxylic resin with MW 2000 and OH number 60, 130 g of chain extender (monoethylene glycol), 11 g of tryethanolamine, 13 g of Amine Delay Catalyst (Dabco) minor amounts of cell regulators and emulsifiers 1% (10.5 g) expandable microspheres and 0.69% (7.5 g) water. This mixture of polyol + additives and water and microspheres is reacted with 1200 g of MDI based prepolymer with 23% NCO and 2.03 functionality.

After free-rise casting the following values are obtained (time zero is the start of the casting): cream time: 7 sec; microsphere expansion time: start at 10 sec, end at 18 sec; end of rising time: 50 sec; initial temperature: 50°C; maximum temperature: 110°C; free-rise density: 0.12 g/ml.

The same composition in a mould gave: density 0.20 g/ml, extraction time 150-180 sec, hardness 70 Shore A.

The following table shows a comparison of known and invention methods and the resulting characteristics of the products of Example 1.

**Table 1.**

| *Production of shoe soles for woman sandals.* | | | | | | | |
|---|---|---|---|---|---|---|---|
| *Prio Art Method* | | | | | | *Invention Method* | |
| | | | | | | | |
| | | | Isocyanate | Polyol | | Isocyanate | Polyol |
| WORKING TEMPERATURE | | | 35°C | 45°C | | 35°C | 45°C |
| | | | | | | | |
| RATIO ISO / POLYOL | | | 115 | 100 | | 120 | 100 |
| | | | | | | | |
| HARDNESS | | | 70 SHORE A | | | 70 SHORE A | |
| | | | | | | | |
| FREE RISE DENSITY | | | 0,180 - 0.240 G/L | | | 0.090 - 0,120 G/L | |
| | | | | | | | |
| MOULDED DENSITY | | | 0,29 - 0,35 G/L | | | 0,17 - 0,26 G/L | |
| | | | | | | | |
| DEMOULDING TIME | | | 150 -180 SECONDS | | | 150 - 180 SECONDS | |
| | | | | | | | |
| ABRASION | | | 180 mg | DIN 53516 | | 190 mg | DIN 53516 |
| | | | | | | | |
| ELONGATION AT BREAK | | | 240% | | | 235% | |
| | | | | | | | |
| SHRINKAGE | | | <0,5% | | | <0,3% | |

### Example 2 - Production of intersoles for sport shoes.

The polyurethane system of Example 1 was used, but for an amount of microspheres of 8% and an amount of water of 2.2%.

The free-rise density obtained with this formulation was 0.07 g/ml and, notwithstanding the increased amount of microspheres and water, the reaction is slow enough to result in a controlled and homogeneous filling of the mould, without gaps or "air holes" (air inclusion) in the final product.

The following table shows a comparison of known and invention methods and the resulting characteristics of the products of Example 2.

**Table 2.**

| *Production of intersoles for sport shoes.* | | | | | | |
|---|---|---|---|---|---|---|
| ***Prior Art Method*** | | | | | ***Invention Method*** | |
| | | | | | | |
| | | Isocyanate | Polyol | | Isocyanate | Polyol |
| WORKING TEMPERATURE | | 35 ° C | 45°C | | 35 ° C | 45 °C |
| | | | | | | |
| RATIO ISO / POLYOL | | 80 | 100 | | 110 | 100 |
| | | | | | | |
| HARDNESS | | 35 SHOE A | | | 35 SHORE A | |
| | | | | | | |
| FREE RISE DENSITY | | 0,150 - 0,190 g/ml | | | 0,070 - 0 090 g/ml | |
| | | | | | | |
| MOULDED DENSITY | | 0,30 - 0,35 g/ml | | | 0,18 - 0,25 g/ml | |
| | | | | | | |
| DEMOULDING TIME | | 240-300 SECONDS | | | 240-300 SECONDS | |
| | | | | | | |
| SPLIT TEAR | | 2,5 Kg/cm | | | 2,1 Kg/cm | |
| | | | | | | |
| ELONGATION AT BREAK | | 250 - 300 % | | | 250 - 300% | |
| SHRINKAGE | | < 0,5 % | | | < 0,2 % | |
| | | | | | | |
| COMPRESSION SET | | 15% | | | 10-15% | |

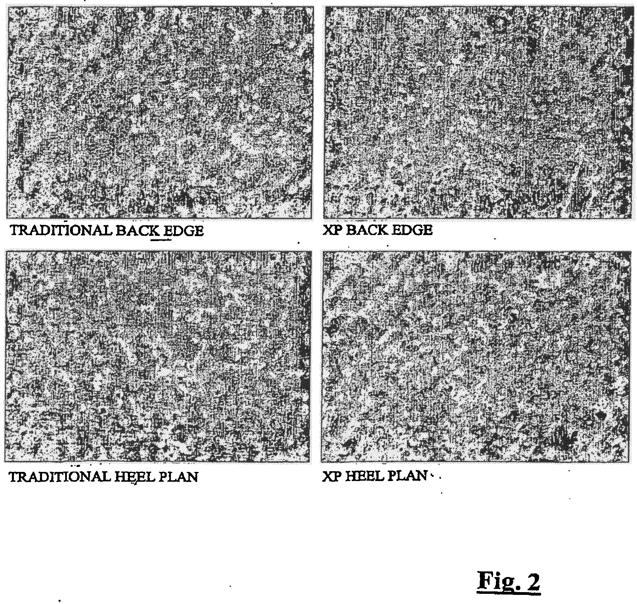

Fig. 2 shows four photomicrographs, at an enlargement of X 200, of two points on the surface of an intersole made according to the invention, compared with the corresponding points on a traditional intersole. The photographs in the right hand column relate to a traditional intersole and show the back edge (traditional back edge) and the plan of the heel (traditional heel plan) obtained using a known formulation; those in the left hand column (XP back edge and XP heel plan) refer to the corresponding points on an intersole obtained using a formulation according to the invention. It can be observed that the "XP" foam product according to the invention appears more homogeneous and with more uniform cells with respect to the traditional product.

It has been further observed that the addition of microspheres, besides the above discussed advantages of very low density, also results in the increased resistance of the foam product to hydrolysis.

Such resistance is shown in the following table in relation to tests carried out on moulded test sheets of 5mm x 10mm x20mm moulded from a flexible polyurethane with a MEG content of around 11-13% by weight over the polyol and Shore A equal to 27, produced according to the invention, containing 3.1% expandable microspheres.

The tests have been carried out according to UNI 6065/01 and UNI 4914/87 standards.

Hydrolysis has been carried out by immersion in distilled water at a temperature of 23°C for 28 days (UNI 8313/93). ,

**Table**

| | | |
|---|---|---|
| *Pre-hydrolysis* | *skin+foam* | *only foam* |
| *elongation at break %* | *240* | *235* |
| *tear resistance (N*/*mm)* | *7,60* | *7,28* |
| *Following hydrolysis* | | |
| *elongation at break %* | *230* | 225 |
| *tear resistance (N*/*mm)* | *7,30* | *7,00* |

The use of microspheres in polyurethane foam products in order to increase their resistance to hydrolysis is therefore a further subject of the present invention.

## Claims

1. A liquid polyurethane reactive system for production of footwear products with integral skin, comprising at least one polyol to be reacted with at least one isocyanate MDI-based prepolymer, an expanding agent that is water, additives including catalyst and expandable microspheres, **characterised in that** the amount of expandable microspheres is within the range of 1,0% to 30% by weight on the weight of said polyol and additives and the amount of water is within the range of 0,5% to 3,5% by weight on the weight of said polyol and additives, said at least one polyol being selected from polyester adipic resins and said at least one isocyanate prepolymer has a NCO functionality comprised within the range from 2.0 to 2.05, and the NCO percent of the isocyanate prepolymer is within the range of 16% to 34%.

2. A polyurethane system according to claim 1, the amount of expandable microspheres is within the range of 1.5% to 20% by weight on the weight of said polyol and additives and the amount of water is within the range of 0.75% to 3.0% by weight on the weight of said polyol and additives.

3. A polyurethane system according to claim 2, wherein the amount of said expandable microspheres is within the range of 2.0% to 10.0% by weight on the weight of said polyol and additives and the amount of water is within the range of 1.0% to 2.5% by weight on the weight of said polyol and additives.

4. A polyurethane system according to any previous claim, wherein the ratio microspheres/water (w/w) is within the range of 2/1 to 30/3.5.

5. A process for the production of foamed footwear products with integral skin through reaction of a liquid polyurethane system comprising at least one polyol, reaction additives, at least one isocyanate MDI-based prepolymer, expandable microspheres and at least one expanding agent that is water, **characterised in** said at least one polyol being selected from polyester adipic resins **in that** said at least one isocyanate prepolymer has a NCO functionality comprised within the range from 2,0 to 2.05, and the NCO percent of the isocyanate prepolymer is within the range of 16% to 34%, and **in that** said reaction is carried out by using:
- an amount of expandable microspheres that is within the range of 1.0% to 30.0% by weight on the weight of said polyol including additives; in combination with
- an amount of water that is within the range of 0.50% to 3.50% by weight on the weight of said polyol including additives, so as to provide a foamed structure having a free-rise density within the range of 0.05 to 0.22 g/ml;
the expansion step of the mixed polyol-isocyanate pre-polymer, being carried out at a temperature sufficient to cause the expansion of said microspheres during said expansion step.

6. The process according to claim 5, wherein the amount of expandable microspheres is within the range of 1.5% to 20% by weight on the weight of said polyol and additives and the amount of water is within the range of 0.75% to 3.0% by weight on the weight of said polyol and additives.

7. The process according to claim 5, wherein the amount of expandable microspheres is within the range of 2.0% to 10.0% by weight on the weight of said polyol and additives and the amount of water is within the range of 1.0% to 2.5% by weight on the weight of said polyol and additives.

8. The process according to claims 5 to 7, wherein said microsphere expansion temperature is reached in up to 35 seconds.

9. The process according to one of the claims 5 to 8, wherein the expansion temperature of said microspheres is within the range of 65°C to 125°C.

10. A foamed polyurethane footwear component as obtainable with a process according to any claim 5 to 9, **characterised by** having an integral skin, a free-rise density within a range of 0.05 to 0.22 g/ml and by comprising expanded microspheres.

11. A foamed polyurethane footwear component as obtainable with a process according to any claim 5 to 9, **characterised by** having an integral skin, moulded density of 0.10 to 0.28 g/ml and by comprising expanded microspheres.

12. The use of expandable microspheres in a liquid reactive polyol/isocyanate system according to any claim 1 to 4 to stabilise a foamed structure during the system reaction in the presence of excess expanding agent.

13. The use of expandable microspheres in a liquid reactive polyol/isocyanate system according to any claim 1 to 4 in order to increase the resistance to hydrolysis of a foam structure obtained using said system.

## Patentansprüche

1. Flüssiges reaktives Polyurethansystem zur Herstellung von Schuhwerkprodukten mit integraler Haut, enthaltend mindestens ein Polyol, das mit mindestens einem MDI-basierten Isocyanatpräpolymer umzusetzen ist, ein Expansionsmittel, welches Wasser ist, Additive, einschließlich Katalysator und expandierbare Mikrokügelchen, **dadurch gekennzeichnet, dass** die Menge der expandierbaren Mikrokügelchen innerhalb des Bereichs von 1,0 bis 30 Gew.-%, bezogen auf das Gewicht dieses Polyols und der Additive, liegt und die Menge an Wasser innerhalb des Bereichs von 0,5 bis 3,5 Gew.-%, bezogen auf das Gewicht dieses Polyols und der Additive, liegt, wobei dieses mindestens eine Polyol aus Adipinsäurepolyesterharzen ausgewählt ist und dieses mindestens eine Isocyanatpräpolymer eine NCO-Funktionalität aufweist, die innerhalb des Bereichs von 2,0 bis 2,05 liegt und das NCO-Prozent der Isocyanatpräpolymer innerhalb des Bereichs von 16% bis 34% liegt.

2. Polyurethansystem gemäß Anspruch 1, wobei die Menge der expandierbaren Mikrokügelchen innerhalb des Bereichs von 1,5 bis 20 Gew.-%, bezogen auf das Gewicht dieses Polyols und der Additive, liegt und die Menge an Wasser innerhalb des Bereichs von 0,75 bis 3,0 Gew.-%, bezogen auf das Gewicht dieses Polyols und der Additive, liegt.

3. Polyurethansystem gemäß Anspruch 2, wobei die Menge dieser expandierbaren Mikrokügelchen innerhalb des Bereichs von 2,0 bis 10,0 Gew.-%, bezogen auf das Gewicht dieses Polyols und der Additive, liegt und die Menge an Wasser innerhalb des Bereichs von 1,0 bis 2,5 Gew.-%, bezogen auf das Gewicht dieses Polyols und der Additive, liegt.

4. Polyurethansystem gemäß einem der vorstehenden Ansprüche, wobei das Verhältnis Mikrokügelchen/Wasser (w/w) innerhalb des Bereichs von 2/1 bis 30/3,5 liegt.

5. Verfahren zur Herstellung eines geschäumten Schuhwerkprodukts mit integraler Haut durch Reaktion eines flüssigen Polyurethansystems, das mindestens ein Polyol, Reaktionsadditive, mindestens ein MDI-basiertes Isocyanatpräpolymer, expandierbare Mikrokügelchen und mindestens ein Expansionsmittel, das Wasser ist, enthält, **dadurch gekennzeichnet, dass** dieses mindestens eine Polyol aus Adipinsäurepolyesterharzen ausgewählt ist, dass das mindestens eine Isocyanatpräpolymer eine NCO-Funktionalität, die innerhalb des Bereichs von 2,0 bis 2,05 liegt, aufweist und dass diese Reaktion durchgeführt wird unter Verwendung:
- einer Menge von expandierbaren Mikrokügelchen, die innerhalb des Bereichs von 1,0 bis 30 Gew.-%, bezogen auf das Gewicht dieses Polyols einschließlich Additiven, liegt, in Kombination mit
- einer Menge von Wasser, die innerhalb des Bereichs von 0,50 bis 3,50 Gew.-%, bezogen auf das Gewicht dieses Polyols einschließlich Additiven, liegt, und zwar so, um eine geschäumte Struktur mit einer Dichte beim freien Aufschäumen innerhalb des Bereichs von 0,05 bis 0,22 g/ml bereitzustellen,
wobei der Expansionsschritt der Mischung Polyol-Isocyanatpräpolymer bei einer Temperatur durchgeführt wird, die ausreichend ist, um die Expansion dieser Mikrokügelchen während dieses Expansionsschritts zu bewirken.

6. Verfahren gemäß Anspruch 5, wobei die Menge der expandierbaren Mikrokügelchen innerhalb des Bereichs von 1,5 bis 20 Gew.-%, bezogen auf das Gewicht dieses Polyols und der Additive, liegt und die Menge an Wasser innerhalb des Bereichs von 0,75 bis 3,0 Gew.-%, bezogen auf das Gewicht dieses Polyols und der Additive, liegt.

7. Verfahren gemäß Anspruch 5, wobei die Menge der expandierbaren Mikrokügelchen innerhalb des Bereichs von 2,0 bis 10,0 Gew.-%, bezogen auf das Gewicht dieses Polyols und der Additive, liegt und die Menge an Wasser innerhalb des Bereichs von 1,0 bis 2,5 Gew.-%, bezogen auf das Gewicht dieses Polyols und der Additive, liegt.

8. Verfahren gemäß Ansprüchen 5 bis 7, wobei diese Mikrokügelchen-Expansionstemperatur innerhalb von bis zu 35 Sekunden erreicht wird.

9. Verfahren gemäß einem der Ansprüche 5 bis 8, wobei die Expansionstemperatur dieser Mikrokügelchen innerhalb des Bereichs von 65 °C bis 125 °C liegt.

10. Geschäumte Polyurethan-Schuhwerkkomponente erhältlich nach einem Verfahren nach einem der Ansprüche 5 bis 9, **dadurch gekennzeichnet, dass** sie eine integrale Haut aufweist, eine Dichte bei freiem Aufschäumen innerhalb des Bereichs von 0,05 bis 0,22 g/ml aufweist, und dadurch, dass sie expandierte Mikrokügelchen enthält.

11. Geschäumte Polyurethan-Schuhwerkkomponente erhältlich nach einem Verfahren gemäß einem der Ansprüche 5 bis 9, **dadurch gekennzeichnet, dass** sie eine integrale Haut aufweist, eine Formdichte von 0,10 bis 0,28 g/ml aufweist, und dadurch, dass sie expandierte Mikrokügelchen enthält.

12. Verwendung von expandierbaren Mikrokügelchen in einem flüssigen reaktiven Polyol/Isocyanat-System gemäß einem der Ansprüche 1 bis 4, um eine geschäumte Struktur während der Systemreaktion in Gegenwart von überschüssigem Expansionsmittel zu stabilisieren.

13. Verwendung von expandierbaren Mikrokügelchen in einem flüssigen reaktiven Polyol/Isocyanat-System gemäß einem der Ansprüche 1 bis 4, um die Beständigkeit einer geschäumten Struktur, die unter Verwendung dieses Systems erhalten wurde, gegenüber Hydrolyse zu erhöhen.

## Revendications

1. Système réactif liquide à base de polyuréthane pour la production de produits de type chaussure avec une peau intégrée, comprenant au moins un polyol à faire réagir avec au moins un prépolymère à base d'un isocyanate MDI, un agent d'expansion qui est l'eau, des additifs comprenant un catalyseur et des microsphères expansibles, **caractérisé en ce que** la quantité des microsphères expansibles se situe dans la plage de 1,0 % à 30 % en poids, par rapport au poids dudit polyol et desdits additifs et la quantité d'eau se situe dans la plage de 0,5 % à 3,5 % en poids, par rapport au poids dudit polyol et desdits additifs, ledit au moins un polyol étant choisi parmi les résines adipiques de polyester et ledit au moins un prépolymère d'isocyanate comprend une fonctionnalité NCO se situant dans la plage de 2,0 à 2,05, et le pourcentage de NCO du prépolymère d'isocyanate se situe dans la plage de 16% à 34%.

2. Système à base de polyuréthane selon la revendication 1, dans lequel la quantité des microsphères expansibles se situe dans la plage de 1,5 % à 20 % en poids, par rapport au poids dudit polyol et desdits additifs et la quantité d'eau se situe dans la plage de 0,75 % à 3,0 % en poids, par rapport au poids dudit polyol et desdits additifs.

3. Système à base de polyuréthane selon la revendication 2, dans lequel la quantité desdites microsphères expansibles se situe dans la plage de 2,0 % à 10,0 % en poids, par rapport au poids dudit polyol et desdits additifs et la quantité d'eau se situe dans la plage de 1,0 % à 2,5 % en poids, par rapport au poids dudit polyol et desdits additifs.

4. Système à base de polyuréthane selon l'une quelconque des revendications précédentes, dans lequel le rapport microsphères/eau (en poids) se situe dans la plage de 2/1 à 30/3,5.

5. Procédé de production de produits de type chaussure en mousse comprenant une peau intégrée, par réaction d'un système liquide à base de polyuréthane comprenant au moins un polyol, des additifs de réaction, au moins un prépolymère à base d'un isocyanate MDI, des microsphères expansibles et au moins un agent d'expansion qui est l'eau, **caractérisé en ce que** ledit au moins un polyol est choisi parmi les résines adipiques de polyester, **en ce que** ledit au moins un prépolymère d'isocyanate comprend une fonctionnalité NCO se situant dans la plage de 2,0 à 2,05, et **en ce que** ladite réaction est réalisée à l'aide de :
- une quantité de microsphères expansibles qui se situe dans la plage de 1,0 % à 30 % en poids, par rapport au poids dudit polyol comprenant des additifs ; en combinaison avec
- une quantité d'eau qui se situe dans la plage de 0,50 % à 3,50 % en poids, par rapport au poids dudit polyol comprenant des additifs, de façon à fournir une structure expansée ayant une masse volumique sans pression dans la plage de 0,05 à 0,22 g/ml ;
l'étape d'expansion du polyol-pré-polymère d'isocyanate mixte étant réalisée à une température suffisante pour provoquer l'expansion desdites microsphères pendant ladite étape d'expansion.

6. Procédé selon la revendication 5, dans lequel la quantité des microsphères expansibles se situe dans la plage de 1,5 % à 20 % en poids, par rapport au poids dudit polyol et desdits additifs et la quantité d'eau se situe dans la plage de 0,75 % à 3,0 % en poids, par rapport au poids dudit polyol et desdits additifs.

7. Procédé selon la revendication 5, dans lequel la quantité des microsphères expansibles se situe dans la plage de 2,0 % à 10,0 % en poids, par rapport au poids dudit polyol et desdits additifs et la quantité d'eau se situe dans la plage de 1,0 % à 2,5 % en poids, par rapport au poids dudit polyol et desdits additifs.

8. Procédé selon les revendications 5 à 7, dans lequel ladite température d'expansion des microsphères est atteinte en 35 secondes.

9. Procédé selon l'une des revendications 5 à 8, dans lequel la température d'expansion desdites microsphères se situe dans la plage de 65°C à 125°C.

10. Composant de chaussure en polyuréthane expansé susceptible d'être obtenu par un procédé selon l'une quelconque des revendications 5 à 9, **caractérisé en ce qu'**il a une peau intégrée, une masse volumique sans pression dans la plage de 0,05 à 0,22 g/ml et qu'il comprend des microsphères expansées.

11. Composant de chaussure en polyuréthane expansé susceptible d'être obtenu par un procédé selon l'une quelconque des revendications 5 à 9, **caractérisé en ce qu'**il a une peau intégrée, une masse volumique moulée de 0,10 à 0,28 g/ml et qu'il comprend des microsphères expansées.

12. Utilisation de microsphères expansibles dans un système réactif liquide de polyol/isocyanate selon l'une quelconque des revendications 1 à 4, pour stabiliser une structure expansée pendant la réaction du système en présence d'un excès d'agent d'expansion.

13. Utilisation de microsphères expansibles dans un système réactif liquide de polyol/isocyanate selon l'une quelconque des revendications 1 à 4, afin d'accroître la résistance à l'hydrolyse d'une structure en mousse obtenue à l'aide dudit système.
